Europäisches Patentamt

European Patent Office

Office européen des brevets

(19)

(11) Numéro de publication: **0 234 962**

**B1**

(12) # FASCICULE DE BREVET EUROPÉEN

(45) Date de publication du fascicule du brevet:
**13.09.89**

(51) Int. Cl.⁴: **F 16 L 59/08**

(21) Numéro de dépôt: **87400012.8**

(22) Date de dépôt: **06.01.87**

(54) Ecran réflecteur, son procédé de fabrication, et son application à un dispositif d'isolation thermique.

(30) Priorité: **10.01.86 FR 8600320**

(43) Date de publication de la demande:
**02.09.87 Bulletin 87/36**

(45) Mention de la délivrance du brevet:
**13.09.89 Bulletin 89/37**

(84) Etats contractants désignés:
**BE DE ES FR GB IT**

(56) Documents cité:
**FR-A-2 033 461**
**FR-A-2 378 576**
**GB-A-1 012 621**
**GB-A-1 107 877**

(73) Titulaire: **BRONZAVIA- AIR EQUIPEMENT, 207, bld St Denis, F-92400 Courbevoie (FR)**

(72) Inventeur: **Dieul, Jean, THOMSON- CSF SCPI 19, avenue de Messine, F-75008 Paris (FR)**

(74) Mandataire: **Grynwald, Albert, THOMSON- CSF SCPI, F-92045 PARIS LA DEFENSE CEDEX 67 (FR)**

LIBER, STOCKHOLM 1989

EP 0 234 962 B1

## Description

L'invention a pour objet un écran réflecteur de rayonnement, qui demeure efficace et ne se détériore pas lorsqu'il est utilisé à une température déterminée pendant une durée assez longue, en particulier un écran réflecteur utilisable à une température de 900° C au moins, à son procédé de fabrication, et à son application à la constitution d'un dispositif d'isolation thermique.

On utilise des écrans réflecteurs dans des dispositifs d'isolation thermique ou bien encore dans des dispositifs de concentration de chaleur.

Dans les dispositifs d'isolation thermique, les écrans réflecteurs ont pour but de s'opposer à la transmission de chaleur par rayonnement infrarouge. Ils sont généralement utilisés en association avec des matériaux isolants s'opposant à la transmission de chaleur par convection, tel qu'exposé dans le document FR-A-2 033 461.

On connaît ainsi des dispositifs d'isolation légers et compacts constitués par exemple de supports minces en mica revêtus d'un matériau ayant un pouvoir réfléchissant élevé et un pouvoir émissif réduit, associés à de la laine minérale, et utilisables notamment en aéronautique en raison de leurs faibles poids et encombrement.

Dans les dispositifs de concentration de chaleur, les écrans réflecteurs servent de miroirs. On rencontre de tels dispositifs par exemple autour de fours.

Le rendement d'un écran est d'autant plus important que son pouvoir réfléchissant est élevé, c'est-à-dire lorsque son opacité au rayonnement est importante. Pour cela on utilise des écrans en matériau poli et brillant, tel que de l'or colloïdal, ou bien de l'or projeté en fusion sur le support.

Egalement, dans les dispositifs d'isolation, le rendement d'un écran est d'autant meilleur que son pouvoir émissif est faible. En effet, selon la température à laquelle ils se trouvent, certains matériaux émettent un rayonnement propre souvent fonction de la température et néfaste au rendement, puisqu'il engendre de la chaleur au-delà de l'écran.

De plus, le rendement d'un écran dépend de la fréquence du rayonnement incident. En effet, un écran peut être opaque à certaines fréquences et plus ou moins transparent à d'autres. Dans ce cas, l'écran peut réémettre une partie du rayonnement absorbé, en plus de son propre rayonnement lié à la température.

En outre, plus la température est élevée, plus le rayonnement infrarouge reçu par un écran s'étend dans une large plage de fréquences et un seul écran ne suffit pas à arrêter le rayonnement, et c'est pourquoi, dans les dispositifs d'isolation thermique utilisés à haute température, il faut intercaler plusieurs écrans entre plusieurs couches de laine ou matériau similaire, afin d'arrêter le maximum de rayonnement.

En outre, certains matériaux ne sont pas utilisables au-delà d'une certaine température lorsqu'ils sont au contact de l'air ambiant car ils s'oxydent et perdent alors tout ou partie de leur pouvoir réfléchissant de façon irréversible. En conséquence, ils absorbent d'avantage de rayonnement et, corrélativement, ont tendance à réémettre d'avantage de rayonnement.

Il en est de même des écrans qui sont intercalés dans la laine des dispositifs d'isolation car il existe un matelas d'air à l'intérieur.

En conclusion les écrans de l'art antérieur ne possèdent pas un comportement unique pour des conditions d'utilisation différentes en température et/ou selon les fréquences incidentes, et ne sont pas utilisables à de hautes températures.

L'écran selon l'invention ne présente pas ces inconvénients.

Selon l'invention, un écran réflecteur de rayonnement, destiné à être utilisé à une température déterminée au moins égale à 900° C, est constitué d'une part d'une première couche d'un matériau brillant et poli, réfléchissant au moins une partie des fréquences du rayonnement infrarouge, et qui n'est pas altéré lorsqu'il est porté à ladite température, comporte d'autre part une seconde couche d'un matériau support et comporte, intercalée entre les deux premières couches, au moins une troisième couche d'un matériau pour arrêter le rayonnement propre émanant d'une couche plus proche de la source de rayonnement et/ou une partie du rayonnement non réfléchi par cette dernière, la ou les couche(s) intercalée(s) étant solidaire(s) de ses (leurs) deux voisines.

Le rayonnement émanant de la première couche peut être le rayonnement propre de cette couche en fonction de la température et/ou une partie du rayonnement non réfléchi par cette couche.

Ainsi, en intercalant plusieurs couches successives, on parvient à réaliser un écran possédant un pouvoir réfléchissant pour l'ensemble du rayonnement infrarouge.

Un avantage primordial de l'invention réside dans le fait que les première et seconde couches de matériaux isolent et protègent les couches intercalaires du milieu extérieur. De ce fait, il est possible de constituer ces couches intercalaires avec des matériaux qui seraient détériorés ou oxydés à la température d'utilisation s'ils étaient en contact direct avec le milieu extérieur. Les solutions connues de l'art antérieur ne permettent en aucun cas d'envisager l'utilisation de ces matériaux pour des températures supérieures à la température d'oxydation ou de détérioration, au contact du milieu extérieur, à moins de réaliser un traitement particulier de protection.

Selon une autre caractéristique de l'invention, on réalise l'écran en formant successivement les différentes couches de matériaux réflecteurs les unes sur les autres, par dépôt. Le dépôt peut être effectué d'une façon semblable pour chaque couche, ou, selon les matériaux, d'une façon différente d'une couche à une autre.

Il peut s'agir d'un dépôt chimique en phase vapeur, d'une pulvérisation cathodique, ou bien encore d'un dépôt par électrolyse.

Selon une autre caractéristique, l'écran ainsi réalisé est utilisé pour la réalisation de dispositifs d'isolation thermique comportant un nombre limité de couches s'opposant à la convection et un nombre limité d'écrans.

En effet, si la dernière couche du premier écran, en regard de la laine ne réémet pratiquement pas de rayonnement infrarouge à la température d'utilisation, un seul matelas de laine pour stopper la chaleur de conduction suffira.

D'autres caractéristiques et avantages de l'invention apparaîtront dans la description de quelques modes de réalisation faite en regard des figures annexées sur lesquelles:

- La figure 1 représente les courbes de brillance en fonction des fréquences du rayonnement, pour deux températures données, d'un écran conforme à l'invention;
- La figure 2 est un schéma de principe, en coupe, d'un écran conforme à l'invention;
- La figure 3 est un schéma de principe en coupe, d'un premier dispositif d'isolation thermique réalisé à partir de deux écrans conformes à l'invention;
- La figure 4 est un schéma de principe, en coupe, d'un second dispositif d'isolation thermique réalisé à partir d'un écran conforme à l'invention.

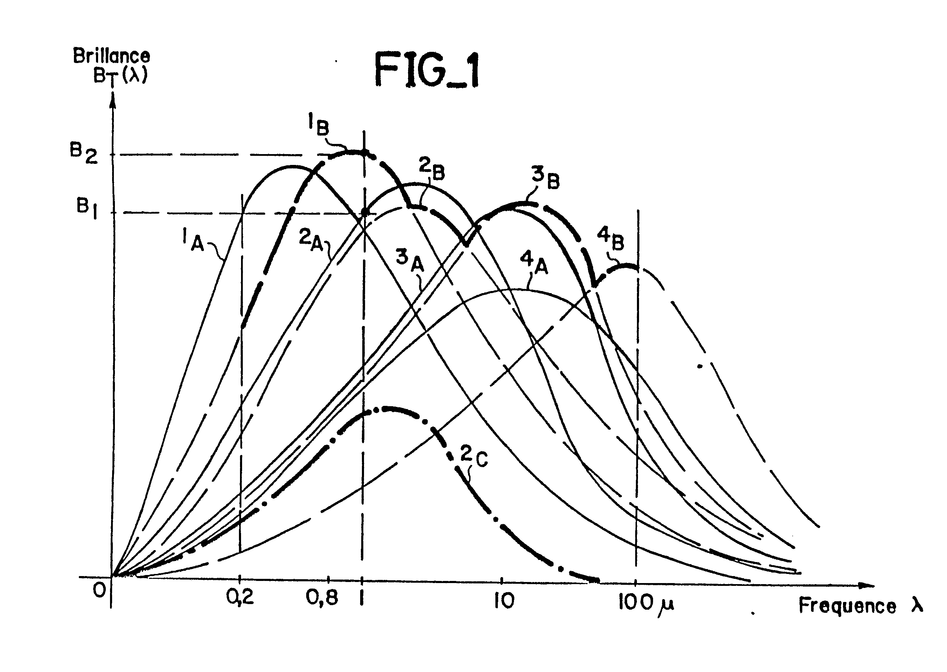

Sur la figure 1, on a représenté les courbes de brillance $B_T(\lambda)$, en fonction des fréquences $\lambda$ du rayonnement pour deux temperatures différentes, d'un écran conforme à l'invention.

La brillance d'un matériau est fonction de son pouvoir réfléchissant. Plus la brillance est élevée, plus le pouvoir réfléchissant est important.

Dans le mode de réalisation correspondant aux courbes de cette figure 1, l'écran comporte quatre couches de matériaux réfléchissants formées les unes sur les autres et disposées sur un matériau support, permettant de conférer une rigidité suffisante à l'ensemble.

Les deux couches extrêmes sont directement au contact du milieu extérieur. Elles sont réalisées dans des matériaux qui ne s'oxydent pas à la température maximale d'utilisation prévue pour l'écran. L'une de ces couches extrêmes est donc constituée par le support.

Les couches intermédiaires sont à l'abri du contact avec le milieu extérieur et ne peuvent donc pas être oxydées. La seule condition pour le choix des matériaux les constituant est qu'ils ne soient pas détériorés par la chaleur lors de l'utilisation.

A une température donnée d'utilisation, chaque couche de matériau possède sa propre courbe de brillance et la brillance de l'écran, résultant de l'association de ces couches, est égale, pour une fréquence $\lambda$ donnée à celle du matériau ayant la valeur la plus élevée à la fréquence et à la température considérées.

Dans l'exemple de la figure 1, pour un écran constitué de quatre couches de matériaux réfléchissants, les courbes 1A, 2A, 3A, 4A sont les courbes de brillance de chacun des matériaux utilisés pour une première température d'utilisation, et les courbes 1B, 2B, 3B, 4B sont les courbes de brillance de ces matériaux pour une seconde température d'utilisation.

On constate sur ces courbes que la brillance des matériaux varie avec la température, et que la brillance globale de l'écran, et donc son pouvoir réfléchissant varient aussi.

Dans l'exemple représenté, on constate que la brillance des matériaux varie avec la température, et que la brillance globale de l'écran, et donc son pouvoir réfléchissant varient aussi.

Dans l'exemple représenté, on constate que la brillance de l'écran, pour une fréquence de rayonnement de 1 µm, possède une valeur B1, pour une première température d'utilisation, et une seconde valeur B2, pour une seconde température d'utilisation.

La valeur B1 à la première température est prise sur la courbe 2A du matériau qui possède la courbe 2B à la seconde température, alors que, à la seconde température, la valeur B2 est sur la courbe 1B du matériau qui possède la courbe 1A à la première température.

On constate ainsi que pour une même fréquence donnée de rayonnement, mais pour deux températures différentes d'utilisation, la brillance de l'écran peut être différente, et en tous les cas, est celle du matériau dont la valeur est plus élevée à la fréquence et à la température considérées. Elle peut donc être déterminée par le même matériau ou par deux matériaux différents.

Il est bien entendu que la brillance est déterminée lorsque les matériaux fragiles ne sont pas soumis à l'influence du milieu extérieur.

Ainsi, par exemple, le matériau qui détermine les courbes 2A et 2B, pour deux températures différentes d'utilisation, est un matériau qui se détériore au contact du milieu extérieur à partir d'une température inférieure aux températures d'utilisation prévues.

Lors de la réalisation de l'écran, ce matériau doit donc constituer l'une des couches intermédiaires, afin d'être protégé par les couches voisines, et pouvoir posséder les deux courbes 2A et 2B. Si ce matériau était placé tel quel au contact du milieu extérieur il aurait, par exemple, pour la température qui entraîne la courbe 2A, une courbe 2C avec des valeurs de brillance beaucoup plus faibles et serait inutilisable pour participer à la constitution d'un écran efficace.

Le rayonnement infrarouge est celui dont la longueur d'onde est comprise entre 0,8 et 100 µm. On constate cependant, sur la courbe, que, selon les matériaux utilisés, l'écran peut réfléchir sur une plage plus large que celle du rayonnement infrarouge.

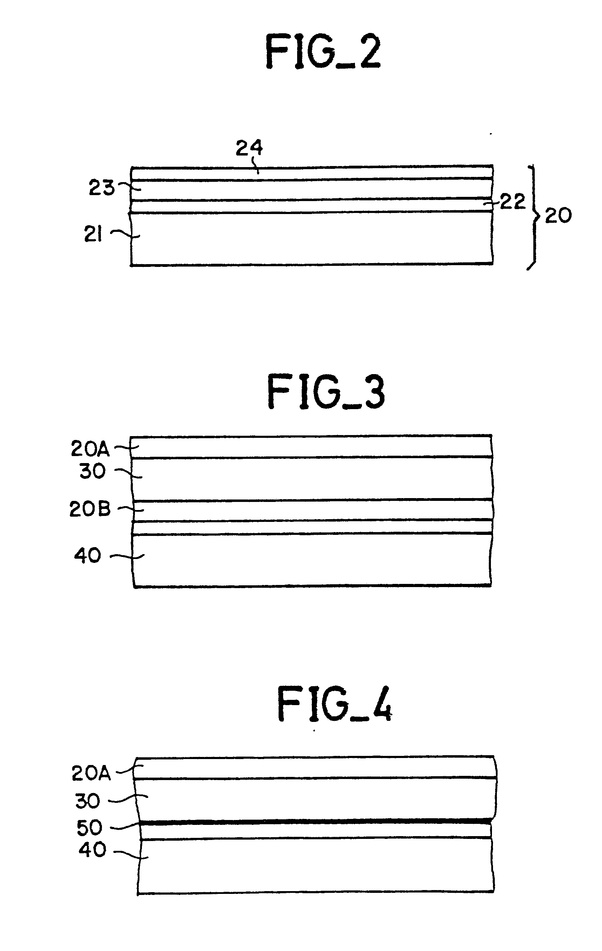

La figure 2 représente en coupe un écran 20 conforme à l'invention.

L'écran 20 représenté comporte par exemple une couche 21 d'un matériau support et trois couches 22, 23, 24 de matériaux ayant un pouvoir réfléchissant différent à des fréquences différentes, pour une température donnée.

Le matériau support 21 est choisi en fonction de la température maximale prévue d'utilisation.

Ainsi, par exemple, si on prévoit d'utiliser l'écran à une température inférieure à 1 000° C, le matériau support pourra être un composé métallique de type réfractaire, et si on prévoit d'utiliser l'écran à des températures supérieures à 1 000° C, on réalisera le support à l'aide de mica ou de composés organiques, ou bien encore à l'aide d'un mélange de carbone et de carbure de silicium.

La couche 24 de matériau réfléchissant située à l'extérieur peut être à base d'or car ce matériau ne s'oxyde pas à hautes températures.

Les couches intermédiaires 22, 23 peuvent être constituées de matériaux réfléchissant les fréquences que l'or laisse passer ou les fréquences que l'or réémet.

Ainsi, on peut utiliser du cuivre, du nickel, du chrome, de l'argent, du platine, du palladium, du tungstène, du molybdène pour réaliser l'une ou l'autre des couches intermédiaires.

Egalement, ces couches intermédiaires peuvent être à base de nitrures, tels que des nitrures de titane, d'hafnium, ou bien à base d'oxydes ou de céramiques.

L'épaisseur d'un écran 20 ainsi constitué peut être inférieure à 100 μm, le support ayant une épaisseur de l'ordre de 5 à 10 μm, et chacune des couches successives pouvant avoir une épaisseur inférieure à 10 μm.

Les différentes couches peuvent être réalisées successivement sur le support soit par électrolyse, soit par déposition en phase vapeur, soit par pulvérisation cathodique. Il suffit simplement que le procédé utilisé pour déposer une couche ne détruise pas l'une ou l'autre des couches antérieurement déposées, ou n'entraîne pas une réaction de détérioration du matériau que l'on dépose sur les couches précédentes.

Sur la figure 3, on a représenté un dispositif d'isolation thermique comportant deux écrans 20A et 20B constitués conformément à l'invention, chacun d'au moins deux couches de matériaux réfléchissants.

Entre ces deux écrans, on trouve par exemple un matelas 30 en matériau isolant tel que de la laine minérale pour limiter la conduction.

Ce dispositif assure l'isolation thermique d'une pièce 40 par rapport à l'extérieur, dans les cas ou la pièce 40 est à haute température et lorsqu'il faut éviter le rayonnement vers l'extérieur, ou bien dans les cas ou l'extérieur est à haute température, alors que la pièce 40 doit être maintenue à une température inférieure.

L'emploi de deux écrans 20A, 20B conformes à l'invention, de chaque côté du matériau 30 isolant des phénomènes de conduction, peut être nécessaire si pour la température d'utilisation, le premier écran intercalé entre la source de chaleur et le matériau 30 réémet un rayonnement infrarouge dans une plage de fréquences assez large.

Le dispositif de la figure 4 est utilisé lorsque le premier écran 20A intercalé entre la source de chaleur et le matériau 30 isolant des phénomènes de conduction ne réémet pas ou pratiquement pas de rayonnement. Dans ce cas, afin de maintenir en place le matériau 30 isolant des phénomènes de conduction, on réalise un dispositif comportant un écran 20A conforme à l'invention, un matelas de matériau 30, et une cloison 50 servant à maintenir le matériau 30 et à absorber éventuellement le résidu de rayonnement infrarouge transmis par le premier écran 20A.

Il est bien entendu, dans ce cas, que le dispositif est monté pour utilisation, de façon que l'écran 20A conforme à l'invention soit placé du côté le plus chaud, et la cloison 50 de maintien du matériau isolant soit placé du côté le moins chaud, à savoir du côté duquel on cherche à éviter la transmission de chaleur.

Il est bien entendu que des moyens, non représentés, peuvent être prévus pour maintenir entre eux les éléments 20A, 30, 20B ou 50, constitutifs du dispositif d'isolation. Egalement, des moyens peuvent être prévus pour rendre étanche le dispositif et éviter que le matériau 30, s'il est sensible à l'humidité ou au milieu extérieur se détériore ou s'oxyde.

Un écran conforme à l'invention est particulièrement avantageux puisqu'il est opaque, pour une large plage de fréquences, au rayonnement infrarouge. Avec des écrans de l'art antérieur, il aurait fallu utiliser une multitude d'écrans constitués chacun par la superposition d'une couche de matériau réfléchissant et d'une couche de matériau support.

On économise donc du matériau support, puisqu'une seule couche de matériau peut soutenir un nombre indéfini de couches de matériaux réfléchissants, et on peut réaliser des dispositifs d'isolation d'épaisseur réduite.

Enfin, on peut employer des matériaux réfléchissants inutilisables tels quels dans l'art antérieur en raison de leur sensibilité au milieu extérieur à haute température.

**Revendications**

1. Ecran (20) réflecteur de rayonnement, en particulier le rayonnement infrarouge, destiné à être utilisé à une température déterminée au moins égale à 900° C, constitué d'une part d'une première couche (24) d'un matériau brillant et poli, pour réfléchir au moins une partie du rayonnement infrarouge, d'autre part d'une seconde couche (21) d'un matériau constituant un support, caractérisé en ce que le matériau de la première couche n'est pas altéré lorsqu'il est porté à ladite température, et en ce qu'il comporte, intercalée entre les deux premières couches, au moins une troisième couche (22, 23) de matériau pour arrêter le rayonnement propre émanant d'une couche (24) plus proche de la source de rayonnement et/ou une partie du rayonnement non réfléchi par cette dernière, et en ce que la ou les couche(s) intercalées (22, 23) est (sont) solidaire(s) de ses (leurs) deux couches voisines.

2. Ecran (20) selon la revendication 1, caractérisé en ce qu'il comporte au moins deux couches (22, 23) intercalées entre la première (24) et la seconde (21) couche de matériau support.

3. Ecran selon l'une quelconque des revendications 1 à 2 précédentes, caractérisé en ce que la première couche (24) est à base d'or.

4. Ecran selon l'une quelconque des revendications 1 à 3 précédentes, caractérisé en ce que la seconde couche (21) constituant le support est à base de mica.

5. Ecran selon l'une quelconque des revendications 1 à 3, caractérisé en ce que la seconde couche (21) constituant le support est un composé organique.

6. Ecran selon la revendication 5, caractérisé en ce que la seconde couche (21) constituant le support contient un mélange de carbone et de carbure de silicium.

7. Ecran selon l'une quelconque des revendications à 3, caractérisé en ce que la seconde couche (21) constituant le support est un composé métallique de type réfractaire.

8. Ecran selon l'une quelconque des revendications 1 à 7, caractérisé en ce qu'une couche intermédiaire (22, 23) est à base d'un matériau choisi parmi le cuivre, le chrome, le platine, l'argent, le palladium, le tungstène, le molybdène.

9. Ecran selon l'une quelconque des revendications 1 à 8, caractérisé en ce qu'une couche intermédiaire (22, 23) est à base de nitrure.

10. Ecran selon la revendication 9, caractérisé en ce que le nitrure est un nitrure de titane et/ou d'hafnium.

11. Ecran selon l'une quelconque des revendications 1 à 10 précédentes, caractérisé en ce qu'une couche intermédiaire (22, 23) est à base d'oxyde.

12. Ecran selon l'une quelconque des revendications 1 à 11, caractérisé en ce qu'une couche intermédiaire (22, 23) est constituée de céramique.

13. Ecran selon l'une quelconque des revendications 1 à 12, caractérisé en ce que les couches successives de matériau support (21) et de matériaux réfléchissants (22, 23, 24) sont des couches minces d'épaisseur inférieure ou égale à 10 μm.

14. Procédé de réalisation d'un écran (20) selon l'une quelconque des revendications 1 à 13 précédentes, caractérisé en ce que les différentes couches réfléchissantes (22, 23, 24) sont formées successivement sur la couche (21) constituant le support.

15. Procédé selon la revendication 14, caractérisé en ce que les différentes couches réfléchissantes (22, 23, 24) sont formées par dépôt.

16. Procédé selon la revendication 14, caractérisé en ce qu'au moins l'une des couches réfléchissantes est formée par dépôt électrolytique.

17. Procédé selon la revendication 14, caractérisé en ce qu'au moins l'une des couches réfléchissantes est formée par dépôt en phase vapeur.

18. Procédé selon la revendication 14, caractérisé en ce qu'au moins l'une des couches réfléchissantes est formée par pulvérisation cathodique.

19. Dispositif d'isolation thermique caractérisé en ce qu'il comporte au moins un écran (20A, 20B) selon l'une quelconque des revendications 1 à 13 pour arrêter le rayonnement infrarouge et au moins une couche (30) d'un matériau pour arrêter la conduction de chaleur au-delà de l'écran.

20. Dispositif d'isolation thermique selon la revendication 19, caractérisé en ce qu'une couche (30) de matériau pour arrêter la conduction est intercalée entre l'écran (20A, 20B) et une cloison (50) de maintien et d'étanchéité.

21. Dispositif d'isolation thermique selon la revendication 19, caractérisé en ce qu'une couche (30) de matériau pour arrêter la conduction est intercalée entre deux écrans (20A, 20B).

22. Dispositif d'isolation thermique selon l'une quelconque des revendications 19 à 21, caractérisé en ce qu'une couche (30) de matériau pour arrêter la conduction est constituée avec de la laine minérale.

**Patentansprüche**

1. Strahlungsreflektierender Schirm (20), insbesondere für die IR-Strahlung, der dazu bestimmt ist, bei einer bestimmten Temperatur von wenigstens 900°C verwendet zu werden, der einerseits aus einer ersten Schicht (24) eines glänzenden und polierten Materials, um wenigstens einen Teil der IR-Strahlung zu reflektieren, und andererseits aus einer zweiten Schicht (21) eines einen Träger bildenden Materials besteht, dadurch gekennzeichnet, daß das Material der ersten Schicht nicht verändert wird, wenn es auf die genannte Temperatur gebracht wird, und daß es eine dritte Materialschicht (22, 23) umfaßt, welche zwischen den ersten beiden Schichten eingefügt ist, um die von einer der Strahlungsquelle näherliegenden Schicht (24) ausgehenden Eigenstrahlung und/oder einen Teil der von dieser Strahlungsquelle nicht reflektieren Strahlung abzufangen, und daß die eingefügte(n) Schicht(en) (22, 23) mit ihren beiden benachbarten Schichten fest verbunden ist (sind).

2. Schirm (20) nach Anspruch 1, dadurch gekennzeichnet, daß er wenigstens zwei Schichten (22, 23) umfaßt, welche zwischen der ersten Schicht (24) und der zweiten Schicht (21) des Trägermaterials eingefügt sind.

3. Schirm nach einem der vorstehenden Ansprüche 1 bis 2, dadurch gekennzeichnet, daß die erste Schicht eine solche auf Goldbasis ist.

4. Schirm nach einem der vorstehenden Ansprüche 1 bis 3, dadurch gekennzeichnet, daß die erste, den Träger bildende Schicht (21) eine solche auf Micabasis ist.

5. Schirm nach einem der Ansprüche 1 bis 3, dadurch gekennzeichnet, daß die zweite, den Träger bildende Schicht (21) eine organische Verbindung ist.

6. Schirm nach Anspruch 5, dadurch gekennzeichnet, daß die zweite, den Träger bildende Schicht (21) eine Mischung aus Kohlenstoff und aus Siliziumkarbid enthält.

7. Schirm nach einem der Ansprüche 1 bis 3, dadurch gekennzeichnet, daß die zweite, den Träger bildende Schicht (21) eine metallische Verbindung vom hitzebeständigen Typ ist.

8. Schirm nach einem der Ansprüche 1 bis 7, dadurch gekennzeichnet, daß eine Zwischenschicht (22, 23) eine solche auf Basis eines Materials ist, das unter Kupfer, Chrom, Platin, Silber, Palladium, Wolfram und Molybdän ausgewählt ist.

9. Schirm nach einem der Ansprüche 1 bis 8, dadurch gekennzeichnet, daß eine Zwischenschicht (22, 23) eine solche auf Nitridbasis ist.

10. Schirm nach Anspruch 9, dadurch gekennzeichnet, daß das Nitrid ein Titan- und/oder Hafnium-Nitrid ist.

11. Schirm nach einem der vorstehenden Ansprüche 1 bis 10, dadurch gekennzeichnet, daß eine Zwischenschicht (22, 23) eine solche auf Oxidbasis ist.

12. Schirm nach einem der Ansprüche 1 bis 11, dadurch gekennzeichnet, daß eine Zwischenschicht (22, 23) aus Keramik besteht.

13. Schirm nach einem der Ansprüche 1 bis 12, dadurch gekennzeichnet, daß die aufeinanderfolgenden Schichten aus Trägermaterial (21) und aus reflektierenden Materialen (22, 23, 24) dünne Schichten sind, deren Dicke kleiner als oder gleich 10 μm ist.

14. Verfahren zum Herstellen eines Schirmes (20) nach einem der vorstehenden Ansprüche 1 bis 13, dadurch gekennzeichnet, daß die verschiedenen reflektierenden Schichten (22, 23, 24) nacheinander auf der den Träger bildenden Schicht (21) gebildet werden.

15. Verfahren nach Anspruch 14, dadurch gekennzeichnet, daß die verschiedenen reflektierenden Schichten (22, 23, 24) durch Überzug gebildet werden.

16. Verfahren nach Anspruch 14, dadurch gekennzeichnet, daß wenigstens eine der reflektierenden Schichten durch elektrolytischen Überzug gebildet wird.

17. Verfahren nach Anspruch 14, dadurch gekennzeichnet, daß wenigstens eine der reflektierenden Schichten durch Niederschlag aus der Dampfphase gebildet wird.

18. Verfahren nach Anspruch 14, dadurch gekennzeichnet, daß wenigstens eine der reflektierenden Schichten durch kathodische Zerstäubung gebildet wird.

19. Vorrichtung zur Wärmeisolierung, dadurch gekennzeichnet, daß sie wenigstens einen Schirm (20A, 20B) nach einem der Ansprüche 1 bis 13 umfaßt, um die IR-Strahlung abzufangen, sowie wenigstens eine Schicht (30) aus einem Material zum Abfangen der Wärmeleitung jenseits des Schirmes umfaßt.

20. Vorrichtung zur Wärmeisolierung nach Anspruch 19, dadurch gekennzeichnet, daß eine Schicht (30) aus einem Material zum Abfangen der Wärmeleitung zwischen dem Schirm (20A, 20B) und einer Trennwand (50) zum Festhalten und zur Abdichtung eingefügt ist.

21. Vorrichtung zur Wärmeisolierung nach Anspruch 19, dadurch gekennzeichnet, daß eine Schicht (30) aus einem Material zum Abfangen der Wärmeleitung zwischen zwei Schirmen (20A, 20B) eingefügt ist.

22. Vorrichtung zur Wärmeisolierung nach einem der Ansprüche 19 bis 21, dadurch gekennzeichnet, daß eine Schicht (30) aus einem Material zum Abfangen der Wärmeleitung aus Steinwolle besteht.

**Claims**

1. A screen for reflecting radiation, more particularly infrared radiation, intended for use at a given temperature equal to at least 900°C, constituted on the one hand by a first layer (24) of a shining, polished material in order to reflect at least a part of the infrared radiation, and on the other hand by a second layer (21) of a material constituting a support, characterized in that the material of the first layer is not changed when it is raised to the said temperature, in that it comprises, placed between the two first layers, at least one third layer (22 and 23) of a material to hold back the actual radiation emanating from a layer (24) which is nearest to the source of radiation and/or a part of the radiation not reflected by the latter, and in that the layer or layers (22 and 23) placed in between is or are integrated with the two layers adjacent thereto.

2. The screen (20) as claimed in claim 1, characterized in that it comprises at least two layers (22 and 23) placed between the first (24) and the second (21) layer of the support material.

3. The screen as claimed in claim 1 or claim 2, characterized in that the first layer (24) is a gold-based layer.

4. The screen as claimed in any one of the preceding claims 1 through 3, characterized in that the second layer (21) constituting the support is based on mica.

5. The screen as claimed in any one of the preceding claims 1 through 3, characterized in that the second layer (21) constituting the support is an organic compound.

6. The screen as claimed in claim 5, characterized in that the second layer (21) constituting the support contains a mixture of carbon and silicon carbide.

7. The screen as claimed in any one of the claims 1 through 3, characterized in that the second layer (21) constituting the support is a metallic compound of the refractory type.

8. The screen as claimed in any one of the claims 1 through 7, characterized in that an intermediate layer (22 and 23) is based on copper, chromium, platinum, silver, palladium, tungsten and/or molybdenum.

9. The screen as claimed in any one of the claims 1 through 8, characterized in that an intermediate layer (22 and 23) is based on a nitride.

10. The screen as claimed in claim 9, characterized in that the nitride is a nitride of titanium and/or hafnium.

11. The screen as claimed in any one of the preceding claims 1 through 10, characterized in that an intermediate later (22 and 23) is based on an oxide.

12. The screen as claimed in any one of the claims 1 through 11, characterized in that an intermediate layer (22 and 23) is constituted by ceramic.

13. The screen as claimed in any one of the claims 1 through 12, characterized in that the successive layers of support material (21) and of the reflecting materials (22, 23 and 24) are thin layers with a thickness less than or equal to 10 μm.

14. A method of the manufacture of a screen (20) as claimed in any one preceding claims 1 through 13, characterized in that the different reflecting layers (22, 23 and 24) are formed successively on the layer (21) constituting the support.

15. The method as claimed in claim 14, characterized in that the different reflecting layers (22, 23 and 24) are formed by deposition.

16. The method as claimed in claim 14, characterized in that at least one of the reflecting layers is formed by electrolytic deposition.

17. The method as claimed in claim 14, characterized in that at least one of the reflecting layers is formed by vapor phase deposition.

18. The method as claimed in claim 14, characterized in that at least one of the reflecting layers is formed by cathodic sputtering.

19. A thermal insulation device characterized in that it comprises at least one screen (20A and 20B) as claimed in any one of the preceding claims 1 through 13 in order to hold back infrared radiation and at least one layer (30) of a material in order to hold back the conduction of heat past the screen.

20. The thermal insulation device as claimed in claim 19, characterized in that the one layer (30) of material to hold back the conduction is placed between the screen (20A and 20B) and a wall (50) for supporting and sealing purposes.

21. The thermal insulation device as claimed in claim 19, characterized in that a layer (30) of material for preventing conduction is placed between the two screens (20A and 20B).

22. The thermal insulation device as claimed in any one of the claims 19 through 21, characterized in that at least one layer (30) of material to prevent conduction is made up with mineral wool.

FIG_1

Brillance $B_T(\lambda)$

$B_2$

$B_1$

$1_B$

$2_B$

$3_B$

$1_A$

$2_A$

$3_A$

$4_A$

$4_B$

$2_C$

O

0,2

0,8

1

10

100 $\mu$

Frequence $\lambda$

EP 0 234 962 B1

# FIG_2

# FIG_3

# FIG_4